# EUROPÄISCHE PATENTSCHRIFT

(11) **EP 0 506 724 B1**
(45) Veröffentlichungstag und Bekanntmachung des Hinweises auf die Patenterteilung: **08.05.1996**
(21) Anmeldenummer: 91900803.7
(22) Anmeldetag: 11.12.1990
(51) Int. Cl.: H04N 3/233

(54) **VERSTÄRKER MIT EINEM ABGESTIMMTEN AUSGANGSÜBERTRAGER**
AMPLIFIER WITH A TUNED OUTPUT TRANSFORMER
AMPLIFICATEUR A TRANSFORMATEUR DE SORTIE SYNTONISE

(30) Priorität: 23.12.1989 DE 3942908
(43) Veröffentlichungstag der Anmeldung: 07.10.1992
(73) Patentinhaber: Deutsche Thomson-Brandt GmbH, D-78003 Villingen-Schwenningen (DE)
(72) Erfinder: LÄUFER, Martin, D-7730 Villingen-Schwenningen (DE); OHNEMUS, Fritz, D-7730 Villingen-Schwenningen (DE)
(86) Internationale Anmeldenummer: EP9002144
(87) Internationale Veröffentlichungsnummer: WO9110319

(56) Entgegenhaltungen:
- EP-A- 0 201 336
- EP-A- 0 284 348
- WO-A-86/00170

## Beschreibung

Die Erfindung betrifft einen Verstärker mit einem abgestimmten Ausgangsübertrager.

Bei Bildröhren, insbesondere bei Bildröhren mit großem Format, treten mehrere Verzerrungen der Geometrie eines geschriebenen Rasters auf. Bei großformatigen Rechteckröhren entsteht z.B. ein Geometriefehler in Nord-Süd-Richtung, der sich in einem parabelförmigen gegen die horizontale Mittellinie gerichtetes Durchhängen der Zeilen äußert. Dieser Fehler ist am oberen und am unteren Bildrand am größten und vermindert sich zur Bildmitte hin kontinuierlich.
Ein weiterer Geometriefehler äußert sich durch die Verbiegung horizontaler Linien in Form zweier Cosinus-Schwingungen während einer Zeilenperiode, der deshalb als "Möwenflügel" bzw. als "Gullwing"-Fehler bezeichnet wird. Er tritt insbesondere in der oberen und unteren Bildschirmhälfte auf. Man beseitigt diesen Fehler durch einen mit Hilfe einer Modulatorschaltung erzeugten doppeltzeilenfrequenten Korrekturstrom, wie z.B. in EP-A- 0 284 348 beschrieben. Nach erfolgter Korrektur ergibt sich jedoch noch ein unter der Bezeichnung "Bending" bekannt gewordenen Fehler, bei dem am rechten und linken Bildrand die Zeilen gegen die Bildmitte hin abgebogen sind und zwar in der oberen Bildhälfte nach unten und in der unteren Bildhälfte nach oben. Dieser Bending-Fehler tritt in dem gleichen Bereich auf wie der Gullwing-Fehler. Es ist bereits eine Schaltungsanordnung zur Beseitigung des Bending-Fehlers in der älteren Anmeldung DE-A- 38 14 563 beschrieben, die jedoch mit einigem Schaltungsaufwand verbunden ist.

Der Erfindung liegt die Aufgabe zugrunde, diesen Bending-Fehler mit einfacheren Mitteln zu beseitigen. Diese Aufgabe wird durch die im Patentanspruch angegebene Maßnahme gelöst. Weitere Ausgestaltungen der Erfindung sind in den Unteransprüchen festgehalten.

Nachfolgend wird die Erfindung an einem Ausführungsbeispiel mit Hilfe der Zeichnung beschrieben.
- Figur 1: zeigt die durch den Verstärker erzielte Auswirkung auf den für Großbildröhren typischen Geometriefehler
- Figur 2: zeigt eine Schaltungsanordnung der Erfindung
- Figur 3: zeigt Diagramme von Signalen an den in Figur 1 gekennzeichneten Punkten

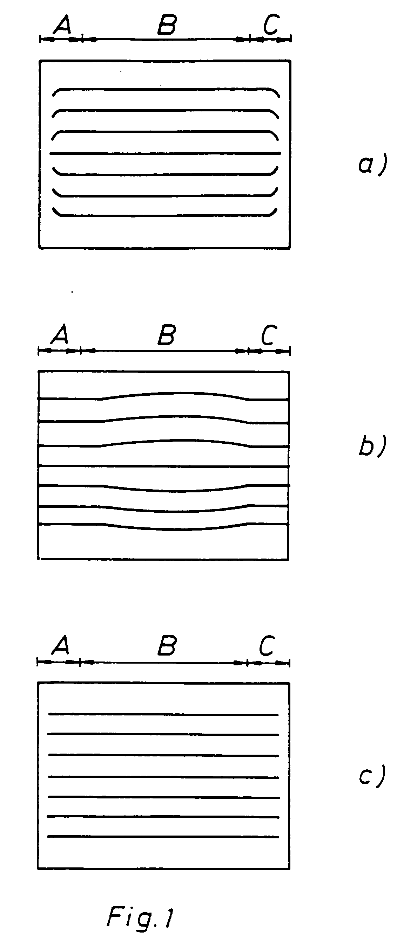

In Figur 1 ist dargestellt, wie sich die nach den Patentansprüchen angegebenen Maßnahmen auf den zu beseitigenden Geometriefehler auswirken. In Figur 1a ist der Bending-Fehler dargestellt, der sich nach erfolgter Gullwing-Korrektur ergibt. Man erkennt die an den Enden der geschriebenen Zeilen abgebogenen Teile in den Bereichen A und C. Will man diesen Fehler durch verstärkte Gullwing-Korrektur beseitigen, ergibt sich eine Überkompensation im Bereich B (Figur 1b). Durch die angemeldete Maßnahme wird diese Überkompensation im Bereich B reduziert, indem der Gullwing-Korrekturstrom bedämpft wird, wodurch im Bereich B die geschriebene Zeile wieder geradlinig wird (Figur 1c). Ziel der Erfindung ist deshalb diese Überkompensation im Bereich B durch geeignete Maßnahmen zu vermeiden. Bekanntlich werden bei Nord-Süd-Korrekturschaltungen abgestimmte Übertrager zwecks Leistungsersparnis und Symmetrierung der Geometriekorrektur für die rechte und linke Seite verwendet. Ein abgestimmter Ausgangskreis bringt jedoch Probleme, wenn sehr schnelle Amplitudenänderungen, und darum handelt es sich bei der Beseitigung des Bending-Fehlers, notwendig sind und übertragen werden müssen. Der Gullwing-Korrekturstrom muß also während einer Zeilendauer von 64 µsec. nach dem Abschnitt A sehr schnell im Abschnitt B auf einen kleineren Wert umgeschaltet werden, worauf er im Abschnitt C sehr schnell wieder den Ausgangswert erreichen muß. Dies ist aber durch eine Modulation des Korrekturstroms durch entsprechende Modulation des der Gullwing-Korrekturschaltung zugeführten Eingangssignals nicht möglich, da wegen der Güte des Schwingkreises die Amplituden der Schwingungen durch die gespeicherte Energie relativ langsam abklingen.

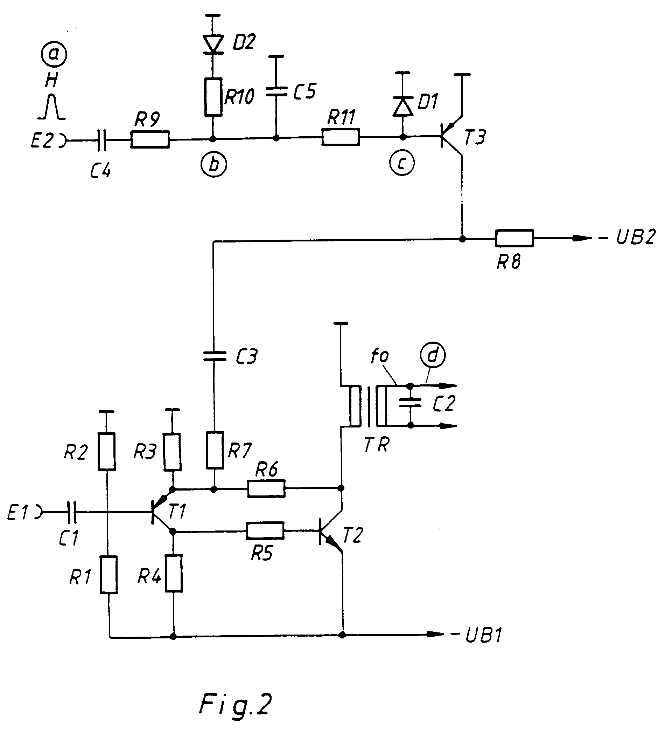

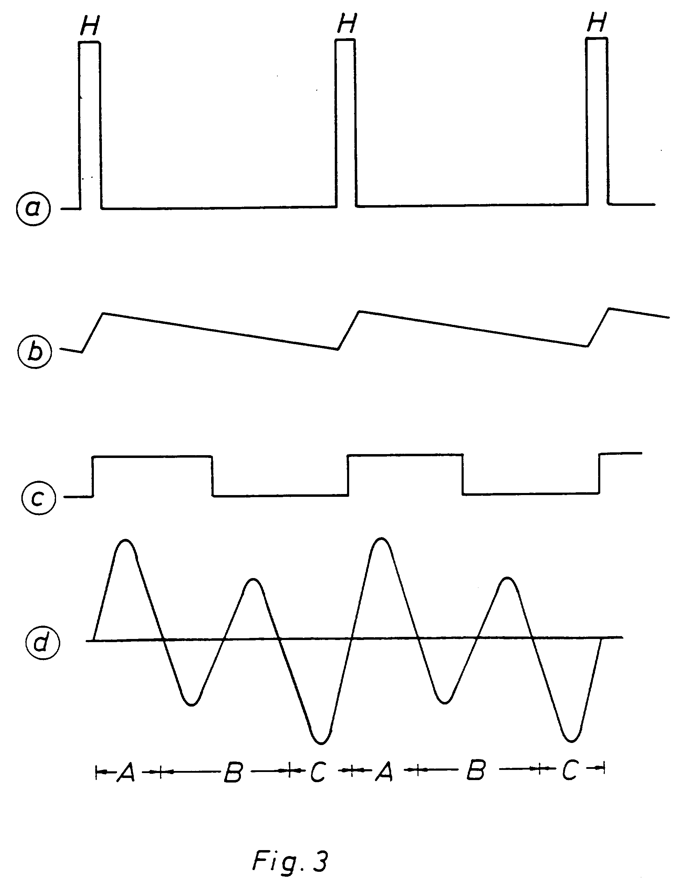

Nachstehend wird an dem Ausführungsbeispiel für eine modifizierte Gullwing-Korrekturschaltung die Erfindung mit Hilfe der Figur 2 im Zusammenhang mit den Diagrammen nach Figur 3 beschrieben.

Bei der Schaltung nach Figur 2 handelt es sich zunächst um eine bekannte Korrekturschaltung zur Beseitigung des Gullwing-Fehlers. Dem Eingang E1 einer gegengekoppelten Verstärkerschaltung wird dem Eingangstransistor T1 über aen Koppelkondensator C1 das Korrektursignal zugeführt. Der Eingangstransistor T1 ist über den aus den Widerständen R1 und R2 gebildeten zwischen die Betriebsspannungsquelle -UB1 und Masse geschalteten Spannungsteiler zwecks Einstellung des Arbeitspunktes des Verstärkers vorgespannt. Der Emitter des Eingangstransistors T1 liegt über den Fußpunktwiderstand R3 des Gegenkopplungsnetzwerkes R6, R3 auf Massepotential, der Kollektor ist über den Arbeitswiderstand R4 mit der Betriebsspannung -UB1 verbunden. Das Signal gelangt über den Widerstand R5 an den Eingang des Leistungstransistors T2, dessen Emitter mit der Betriebsspannungsquelle -UB1 und dessen Kollektor über die Primärwicklung eines Resonanzübertragers TR mit Masse verbunden ist, an dessen Sekundärwicklung das Ausgangskorrektursignal abnehmbar ist. Der Kollektor des Leistungstransistors T2 ist über den Zuführungswiderstand R6 des Gegenkopplungsnetzwerkes R6, R3 mit dem Emitter des Eingangstransistors T1 verbunden. Es handelt sich hier um eine bekannte Gegenkopplungsschaltung. Der Resonanzübertrager TR ist z.B. mit Hilfe des Kondensators C2 auf die doppelte Zeilenfrequenz 2fz = fo abgestimmt. Diese Schaltung wird nun gemäß der Erfindung durch folgende Bauteile ergänzt. Ein Schalttransistor T3, dessen Emitter mit Massepotential verbunden ist, schaltet im geeigneten Augenblick dem Fußpunktwiderstand R3 einen weiteren Widerstand R7 über dem Koppelkondensator C3 parallel. Dieser Koppelkondensator C3 stellt wechselstrommäßig für das Signal einen Kurzschluß dar und dient lediglich zur Abblockung der dem Kollektor des Schalttransistors T3 über den Widerstand R8 zugeführten Betriebsspannung -UB2. Nun wird durch zeitgerechte Ansteuerung des Schalters T3 die Gegenkopplung des oben beschriebenen Verstärkers derart umgeschaltet, daß der Korrekturstrom im Bereich B (Figur 1) verringert wird. Die erhöhte Gegenkopplung bedeutet, daß sich der Innenwiderstand des Verstärkers verringert und daß dadurch der aus der Wicklung des Übertragers TR und dem Kondensator C2 bestehende Schwingkreis eine größere Bedämpfung erfährt. Dazu wird dem Eingang E2 der Zusatzschaltung ein zeilenfrequenter Impuls H (Figur 3a) über den Koppelkondensator C4 zugeführt. Dieser Impuls wird mit Hilfe des Widerstandes R9 und des Konaensators C5 zu einem sägezahnförmigen Signal umgeformt (Figur 3b). Die an das Integrierglied R9/C5 angeschaltete Kombination aus dem Widerstand R10 und der Diode D2 dient als Klemmschaltung und beeinflußt damit die dem Schalttransistor T3 zugeführte Breite der Ansteuerimpulse (Figur 3c), die über den Widerstand R11 an den Schalttransistor T3 gelegt sind. Die Diode D1 dient mit ihrer begrenzenden Wirkung auf die Basis-Emitter-Spannung zum Schutz des Transistors T3. Die Ansteuerung des Schalttransistors T3 muß derart erfolgen, daß er die Gegenkopplung während des Bereichs B erhöht, indem er nichtleitend geschaltet ist. Wegen der induktiven Last des Leistungstransistors T2 bedeutet dies, daß die Ansteuerspannung für den Schalttransistor T3 zum Korrekturstrom um 90° phasenverschoben sein muß. Während der Zeitdauer der erhöhten Gegenkopplung ist dadurch der wirksame Korrekturstrom verringert. Im gezeigten Ausführungsbeispiel wird die Erhöhung der Gegenkopplung durch Abschalten des Parallelwiderstandes R7 erreicht. Man kann die Gegenkopplung auch dadurch erhöhen, indem zum Emitterwiderstand R3 ein Serienwiderstand zugeschaltet wird. In Figur 2d ist die durch die Schaltung erzeugte Beeinflussung des Korrekturstromes dargestellt.

Eine die der Erfindung zugrunde liegende Aufgabe lösende Schaltungsanordnung wurde nach folgender Tabelle dimensioniert:

| | | |
|---|---|---|
| R1: 470 kOhm | C1: 10 nF | D1: 1N4148 |
| R2: 22 kOhm | C2: 0,1 µF | D2: 1N4148 |
| R3: 680 Ohm | C3: 1 µF | |
| R4: 2,2 kOhm | C4: 10 nF | T1: BC 557 |
| R5: 1 kOhm | C5: 1 nF | T2: BD 137 |
| R6: 6,8 kOhm | | T3: BC 557 |
| R7: 330 Ohm | | |
| R8: 15 kOhm | | |
| R9: 47 kOhm | | |
| R10: 47 kOhm | | UB1: -25 V |
| R11: 47 kOhm | | UB2: -15 V |

## Patentansprüche

1. Gegengekoppelter Verstärker zur Erzeugung eines aus zwei Schwingungen pro Zeilenperiode bestehenden Korrekturstromes zur Beseitigung von Geometrieverzerrungen auf dem Bildschirm einer Fernsehbildröhre, mit einem Leistungstransistor (T2), in dessen Ausgangskreis ein auf die doppelte Zeilenfrequenz (fo) abgestimmter Resonanzübertrager (TR) geschaltet ist,
**dadurch gekennzeichnet,** daß der Verstärker so ausgebildet ist, daß der Innenwiderstand am Ausgang des Verstärkers mit Hilfe eines von zeilenfrequenten Impulsen angesteuerten Schalters (T3) in der Weise umschaltbar ist, daß er während der Dauer der zweiten Hälfte der ersten Schwingung und während der Dauer der ersten Hälfte der zweiten Schwingung des Korrekturstromes verkleinert wird und dieser dadurch bedämpft wird.

2. Gegengekoppelter Verstärker nach Anspruch 1,
**dadurch gekennzeihnet,** daß das Gegenkopplungsnetzwerk (R3, R6) des Verstärkers mit Hilfe eines von zeilenfrequenten Impulsen angesteuerten Schalters (T3) in der Weise umgeschaltbar ist, daß die Amplitude des Korrekturstromes während der Dauer der zweiten Hälfte der ersten Schwingung und der ersten Hälfte der zweiten Schwingung des Korrekturstromes bedämpft wird.

3. Gegegekoppelter Verstärker nach Anspruch 2,
**dadurch gekennzeichnet,** daß der Schalter (T3) den Fußpunktwiderstand (R3) des Gegenkopplungsnetzwerks (R6, R3) durch Parallelschalten eines zusätzlichen Widerstandes (R7) verändert.

4. Gegengekoppelter Verstärker nach Anspruch 2,
**dadurch gekennzeichnet,** daß der Schalter (T3) den Fußpunktwiderstand (R3) des Gegenkopplungsnetzwerks (R6, R3) durch Reihenschaltung eines zusätzlichen Widerstandes verändert.

5. Gegengekoppelter Verstärker nach Anspruch 2,
**dadurch gekennzeichnet,** daß der Schalter (T3) den Zuführungswiderstand (R6) des Gegenkopplungsnetzwerks (R6, R3) umschaltet.

## Claims

1. Feedback amplifier for producing a correction current consisting of two oscillations per line period for the elimination of geometrical distortions on the screen of a television picture tube, including a power transistor (T2) in the output circuit of which there is connected a resonant transformer (TR) which is tuned to twice the line frequency (fo),
characterised in that, the amplifier is constructed such that the internal impedance at the output of the amplifier can be changed, with the help of a switch (T3) that is controlled by pulses at line frequency, in such a way that it is made smaller for the duration of the second half of the first oscillation and for the duration of the first half of the second oscillation of the correction current and that this is thereby attenuated.

2. Feedback amplifier in accordance with Claim 1,
characterised in that, the feedback network (R3, R6) of the amplifier can be changed, with the help of a switch (T3) that is controlled by pulses at line frequency, in such a way that the amplitude of the correction current is attenuated for the duration of the second half of the first oscillation and the first half of the second oscillation of the correction current.

3. Feedback amplifier in accordance with Claim 2,
characterised in that, the switch (T3) alters the base resistance (R3) of the feedback network (R6, R3) by switching an additional resistor (R7) in parallel.

4. Feedback amplifier in accordance with Claim 2,
characterised in that, the switch (T3) alters the base resistance (R3) of the feedback network (R6, R3) by switching an additional resistor in series.

5. Feedback amplifier in accordance with Claim 2,
characterised in that, the switch (T3) switches over the feed resistor (R6) of the feedback network (R6, R3).

## Revendications

1. Amplificateur à contre-réaction pour générer un courant de correction composé de deux oscillations par période de ligne et utilisé pour supprimer des distorsions géométriques sur l'écran d'un tube image, comportant un transistor de puissance (T2) dans le circuit de sortie duquel est monté un transformateur à résonance (TR) accordé à la double fréquence de ligne (fo), amplificateur **caractérisé en ce** qu'il est conçu de telle manière que la résistance interne puissent être réglée à la sortie dudit amplificateur à raide d'un commutateur (T3) commandé par les impulsions à fréquence de ligne de telle façon que ladite résistance interne soit réduite pendant la durée de la seconde partie de la première oscillation et pendant la durée de la première partie de la seconde oscillation du courant de correction, faisant que ce dernier soit ainsi atténué.

2. Amplificateur à contre-réaction selon la revendication 1 **caractérisé en ce** que le réseau à contre-réaction (R3, R6) dudit amplificateur peut être commuté au moyen d'un commutateur (T3) commandé par des impulsions à fréquence de ligne de telle manière que l'amplitude du courant de correction soit atténuée pendant la durée de la seconde partie de la première oscillation et pendant la durée de la première partie de la seconde oscillation dudit courant de correction.

3. Amplificateur à contre-réaction selon la revendication 2 **caractérisé en ce** que ledit commutateur (T3) modifie la résistance de base (R3) du réseau à contre-réaction (R6, R3) grâce à la connexion en parallèle d'une résistance supplémentaire.

4. Amplificateur à contre-réaction selon la revendication 2 **caractérisé en ce** que ledit commutateur (T3) modifie la résistance de base (R3) du réseau à contre-réaction (R6, R3) grâce à la connexion en série d'une résistance supplémentaire.

5. Amplificateur à contre-réaction selon la revendication 2 **caractérisé en ce** que ledit commutateur (T3) effectue la commutation de la résistance d'alimentation (R6) dudit réseau à contre-réaction (R6, R3).
